# EUROPEAN PATENT APPLICATION

(11) **EP 1 667 414 A2**
(43) Date of publication of application: **07.06.2006**
(21) Application number: 06004053.2
(22) Date of filing: 29.10.2001
(51) Int. Cl.: H04M 3/22, H04Q 7/34, H04L 29/06

(54) **Lawful interception of compressed voice calls**

(62) Divisional of application: 01125822.5
(71) Applicant: TELEFONAKTIEBOLAGET LM ERICSSON (publ), 164 83 Stockholm (SE)
(72) Inventor: Hellwig, Karl, 97539 Wonfurt (DE); Hodges, Phil, Armadale Victoria 3143 (AU)
(74) Representative: Kribber, Klaus-Dieter

(57) **Abstract**

The present invention relates generally to interception communications in a telephone network, and more, specifically to intercepting communications in compressed mode, i.e. compressed voice frames are overlaid on a PCM stream. This object is achieved by a network node in a telephone system with at least one monitoring apparatus for monitoring payload data exchanged between at least two subscribers wherein the network node sends information on the codec type that has been selected by said at least two subscribers for their call to the monitoring apparatus and that a copy of the payload data is send unmodified to the monitoring apparatus. In one alternative, the codec type is limited by the monitoring apparatus to those codec types which the monitoring apparatus supports.

## Description

### FIELD OF THE INVENTION

The present invention relates generally to intercepting communications in a telephone network, and more, specifically to intercepting communications of tandem free or transcoder free established telephone calls.

### DESCRIPTION OF THE PRIOR ART

From WO 01/47222 the use of a Legal Intercept Monitoring Centre (LIC) for intercepting communication in a Public Land Mobile Network (PLMN) is known.

The known system allows under all circumstances to monitor the acoustic content of a speech channel as the law enforcement authorities get PCM encoded speech. In Tandem Free Operation compressed voice frames are overlaid on a PCM stream by stealing the two least significant bits of each frame. If the Tandem Free Operation is kept during the monitoring operation the law enforcement authorities are provided with the six most significant bits of the PCM stream. As this PCM stream is not a true copy of the originally encoded voice data the subscribers could transmit data in the compressed mode that is not included in the remaining PCM frame of six bits and therefore will be missed by the law enforcement authorities. If Tandem Free Operation is cancelled for each monitored call in order to provide the law enforcement authorities with the originally encoded voice then the two subscribers could detect the drop of Tandem Free Operation due to the different speech quality. They can take this as an indication that their call is monitored. If Transcoder Free Operation is supported a similar scenario could occur of the law enforcement authorities always get transcoded voice ascertain data could be transmitted by the terminals that is filtered off by the PCM encoding algorithms.

### SUMMARY OF THE INVENTION

It is therefore an object of the invention to present a solution for lawful interception that can not be detected and that provides full transparency.

This object is achieved by a network node in a telephone system with at least one monitoring apparatus for monitoring payload data exchanged between at least two subscribers wherein the network node sends information on the codec type that has been selected by said at least two subscribers for their call to the monitoring apparatus and that a copy of the payload data is send unmodified to the monitoring apparatus.

Thus a tandem free operation or a transcoder free operation must not be any longer suppressed in order to ensure a lawful interception as the monitoring apparatus itself is now able to decode the intercepted data. As full transparancy is provided the payload data exchanged by the subscribers can be searched for hidden data. However as a precondition for this solution the monitoring device always must be equipped with the most up-to-date codec types otherwise the content of the monitored call can not be decoded.

In another embodiment of the invention in case a call is to be monitored a network node compares a list of codec type that are supported by at least one of the subscribers with a list of codecs that are supported from a monitoring apparatus generating an updated list of codecs in which all codecs are removed that are not supported by the monitoring apparatus and the network node uses for call setup the updated codec list instead of the list associated to the first subscriber. As only the updated codec type list is used for call setup it is thereby ensured that only calls will be established between a first subscriber and a second subscriber that can be decoded by the equipment of the law enforcement authorities.

This solution has the advantage that the law enforcement equipment must not be equipped with all up-to-date codec types. A subset of all codec types will be sufficient. As usually the codec type with the best speech quality that is available to both subscribers is chosen a significant drop of speech quality may be prevented. In order not to jeopardize the purpose of the invention the monitoring equipment should support at least one codec type the speech quality of which is hard to distinguish from up-to-date codecs.

In the third generation partnership project the network node that receives and updates the list of codecs is the so called mobile switching center. However, the person skilled in the art will readily appreciate that the invention is not restricted to 3GPP systems. The invention is applicable to any network entity the function of which is to support monitoring of calls between subscribers whatever it is called and wherever it is located in a communication system. Therefore the list of codecs supported by a monitoring equipment may be requested by the network node for each monitored call. However the network node itself may locally administrate such a list of one or more monitoring equipment. The general idea of this embodiment is that between a first and a second subscriber only calls of a certain speech codec type are established for which a corresponding codec type is available in the monitoring equipment.

Usually in 3GPP the subscriber initiating a call sends the list of its available codecs. However as the invention relates to modifying a list of codec types according to the codec types that are available in a monitoring equipment the teaching of the invention also covers cases in which a list of all available codec types of the called subscriber is used to decide which codec type should be used. This list may be kept up-to-date by regulary polling the different monitoring equipments and collecting information about which codec types are supported by each individual monitoring equipment. For this purpose the monitoring equipment on request must send a list of the codecs that are supported by the monitoring equipment. Another possibility is that the list of codecs is updated by service personal which edits the list when new codecs have been added or codecs have been removed from a monitoring equipment.

### BRIEF DESCRIPTION OF THE INVENTION

In the following the invention will be further described according to the figures and by means of examples

The figures show
- Fig.1: Call establishment in case monitoring apparatus is provided with full codec support
- Fig. 2: Signal flow in case monitoring apparatus modifies supported codec type list
- Fig. 3: Modification of Codec Noified to DF2 in New Call Related Event
- Fig. 4: User Plane Establishment deploying 3GPP IuFP protocol
- Fig. 5: TFO bits presented to LEMF within PCM frames

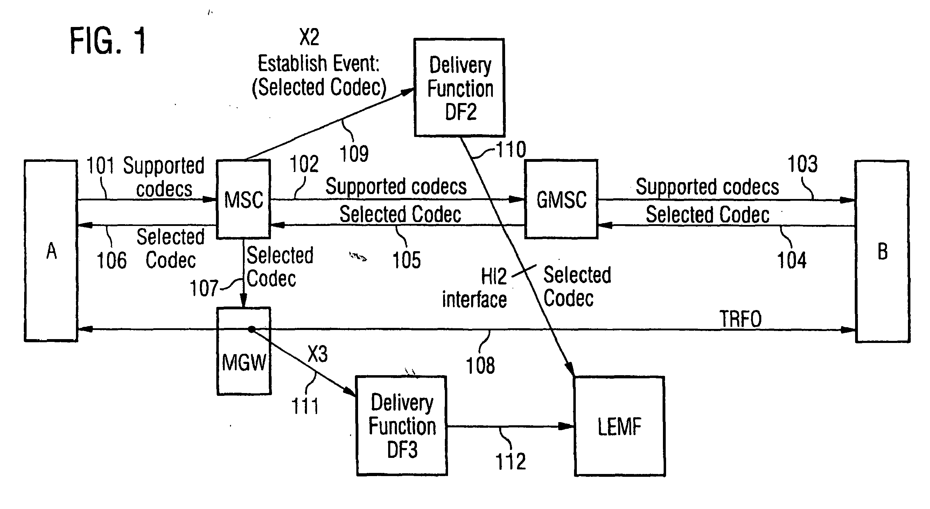

A first embodiment is shown in Figure 1 for the case a subscriber A wants to call a subscriber B. The mobile terminal of subscriber A sends a list of the codec types it supports via a message Supported_Codecs to the network node that handles the call (signaling step 101). In case of a Third Generation Partnership Project (3GPP) system the function of controlling the establishment, maintaining and releasing a call is located in so called mobile switching centers MSC. The mobile switching center MSC to which the first subscriber is assigned to forwards the message Supported_Codecs to the GMSC (signaling step 102) to which the called subscriber is assigned to. The GMSC forwards the message Supported_Codecs to the second subscriber B (signaling step 103). The subscriber B compares the received list of codec types of subscriber A with the list of codec types that is supported of the second subcriber B. Normally that codec type that is common to both subscribers that provides the best quality is selected. The selected codec type is transmitted back via the GMSC (signaling step 104), from there to the MSC (signaling step 105) and from there to the subscriber A (signaling step 106).

As both subscribers support a common codec type a transcoder free operation can be established that provides highest possible quality as no transcoding is necessary within the switched call path. Therefore the media gate way MGW that handles the payload data exchange of the established call is informed by the MSC about the selected codec type in signaling step 107. The Media Gateway MGW switches to a transparent mode and just forwards the payload data, e.g. the speech data from one subscriber of the call to the other subscriber of the call and vice versa (data exchange 108).

In the instant the Selected_codec message arrives at the MSC, the MSC - in case the call should be monitored - informs the legal enforcement monitoring function LEMF about the codec type that has been agreed on by the two subscribers. For the current Third Generation Partnership Project (3GPP) the existing lawful interception architecture is described in 3G TS 33.107. The law enforcement monitoring functions (LEMF) are national specific and not defined by 3GPP. Delivery functions adopt the standardized interfaces X1_1, X2, X3 of the 3G call control servers to the national interfaces HI1, HI2, HI3 of the law enforcement monitoring functions LEMF. Call related events are sent to the LEMF by Delivery Function 2. These are non-real time events and thus could not be used for resolving bearer issues. Currently there is no defined signaling protocol between the 3G call control servers and the Delivery Functions which control the legal interception equipment. The solutions proposed by the invention add new protocol signaling but do not require a change in the existing hardware.

In this embodiment the Call Related Events (as defined in TS 33.107) are used to indicate the selected codec types and possibly the available codec types. These events are categorized. The first event, called Call Establishment is send from the MSC to the Delivery Function F2 (signaling step 109) which informs via the interface H12 the law enforcement monitoring function LEMF (signaling step 110).

During the ongoing call the Media Gateway MGW copies the data received from each subscriber A, B and sends them via the X3 interface (in data exchange step 111) and the Delivery Function DF3 to the law enforcement monitoring function LEMF (via data exchange step 112). As the LEMF is provided with all up-to-date codec types it is able to decode the received data as it also has been informed about the selected codec type.

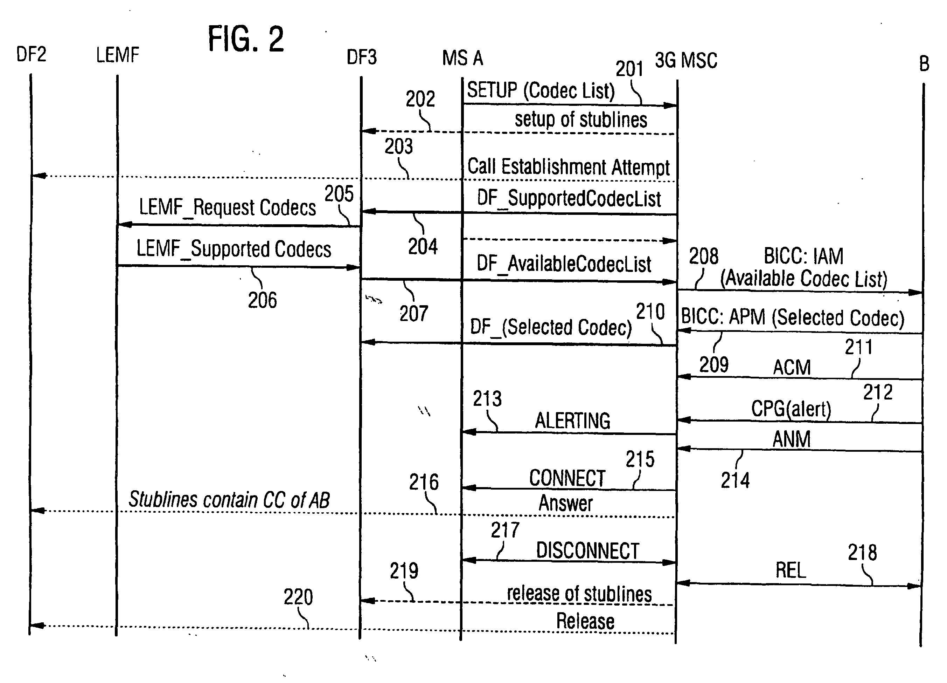

In another preferred embodiment a specific signaling interface is introduced towards the delivering function. One way to accomplish that is shown in Fig. 2 where the signaling between the delivery function DF2, the law enforcement monitoring function LEMF, the delivery function DF3, a calling subscriber MS A (the mobile subscriber that is intended to be monitored), a mobile switching center MSC, a called subscriber B (that can be another mobile subscriber or a subscriber in the public telephone net) is shown. To establish a call the mobile terminal of the calling subscriber A sends during set-up to the associated mobile switching center MSC of the cell from where the calling subscriber is calling a list of its build-in codecs (signaling step 201). In the mobile switching center MSC all calls that are set up are checked if the calling subscriber or the called subscriber are to be intercepted. If this is the case the stublines are set up towards the delivery function DF3 (signaling step 202). Further a Call Establishment Attempt is made towards delivery function DF2 (signaling step 203). The next step, that is new with respect to prior art technology the mobile switching center sends the codec list, that it has received from the calling subscriber MS A to the delivery function DF3 (signaling step 204) in a message called DF_SupportedCodecList. By means of a message called LEMF_RequestCodecs the delivery function DF3 requests from the law enforcement monitoring function LEMF a list of the codes that are available in the law enforcement monitoring function LEMF (signaling step 205). In response to that request the law enforcement monitoring function LEMF sends back to the delivery function DF3 in a message called LEMF_SupportedCodecs the list of its available codec types (signaling step 206). It should be noted that the last two signaling steps 205, 206 need not to be executed in real time. The delivery function DF3 now compares the list received from the calling subscriber MS A and the list received from the law enforcement monitoring function LEMF and removes from the list of the calling subscriber MS A all codec types those are not common. By this the updated codec type list contains only codecs types which can be decoded by the law enforcement monitoring function LEMF. In a message called DF_AvailabelCodecList this updated codec type list is send to the mobile switching center MSC (signaling step 207). The updated codec type list is send from the mobile switching center to the second subscriber B in a BICC: IAM message (signaling step 208). The codec type selected by the second subscriber B is send back to the mobile switching center MSC in a BICC: APM message (signaling step 209). In order to enable the lawful enforcement monitoring function LEMF to use the selected codec type the selected codec type is send to the Delivery Function DF3 in a message called DF_SelectedCodec (signaling step 210). Then ACM and CPG(alert) are send from subscriber B to the mobile switching center MSC (signaling steps 211, 212).ALERTING is send from mobile switching center MSC to the first subscriber A (signaling step 213). In reaction to the ANM send from the second subscriber B to the mobile switching center MSC (signaling step 214) the mobile switching center MSC sends a CONNECT message to the first subscriber A (signaling steps 215). The stublines from the mobile switching center MSC to the Delivery Function DF2 contain a copy of the data exchanged by the first and second subscriber A, B (data exchange 216). As the codec type used between the subscribers A, B is known to the law enforcement monitoring function LEMF the LEMF can decode the speech data. As full transparancy is ensured the LEMF is also able to check if any other data is hidden in the data exchanged by the two subscribers A,B.

In case the call is disconnected a DISCONNECT message is exchanged (signaling step 217 and the connection is released by a release message REL (signaling step 218). In response to a release message (signaling step 219) send to the delivery function DF2 the stub lines are released (220) too.

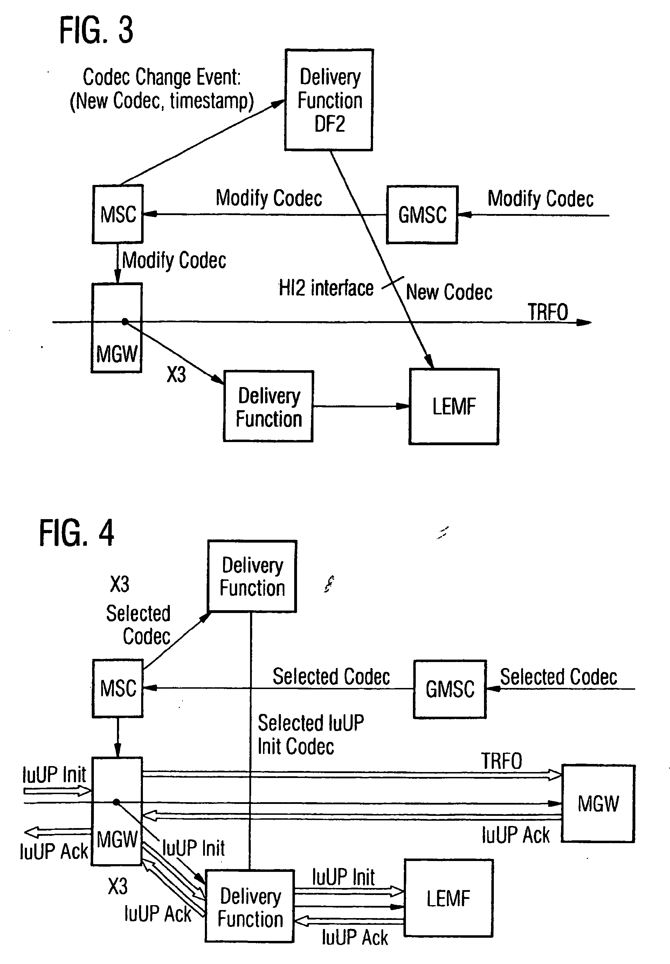

In this alternative codec modification would also need to be indicated to the DF2. Codec modification could be time stamped and included in its own Call Related Event. This could be also achieved via additional parameter to existing call related events (e.g. Handover or Supplementary Service) or a new call related event could be defined. Figure 4 shows the modification.

The delivery function and or the LEMF has the receive inband information such as framing protocol control procedures that would normally be sent end-to-end between the call nodes. For Legal Interception these control procedures (e.g. rate control changes) are also needed. One solution to this would be to generate copies of the control procedures and forward them to the LEMF; this would be the effect of sending all data packets to the LEMF. An alternative solution would be to implement a user plane independent protocol to inform the LEMF of the control information that it would need. This would enable the LEMF to understand the payload without having to support all framing protocols that could be deployed in a network. For example existing framing protocols that carry such information but in different formats are: IuFP (3GPP TS 25.415), AAL2 type 2 service specific convergence sublayer for narrow-band services (ITU-T 1.366.2) and RTP Payload format for AMR and AMR-WB audio(IETF draft-ietf-avt-rtp-amr-10.txt).

An example using the IuFP protocol is shown in Figure 7. Each node in the Transcoder Free Operation TrFO connection that will interpret the payload must receive the UP Initialisation Frame and store the RAB Subflow Combination Ids.

If the Out Of Band Signaling through the network is not supported or TrFO was unsucessful and the call is established with PCM/G71 1 encoding the possibility of TFO still exists. The new codec signaling described in the previous chapter would indicate codec type ITU G711 for example as the default PCM codec.

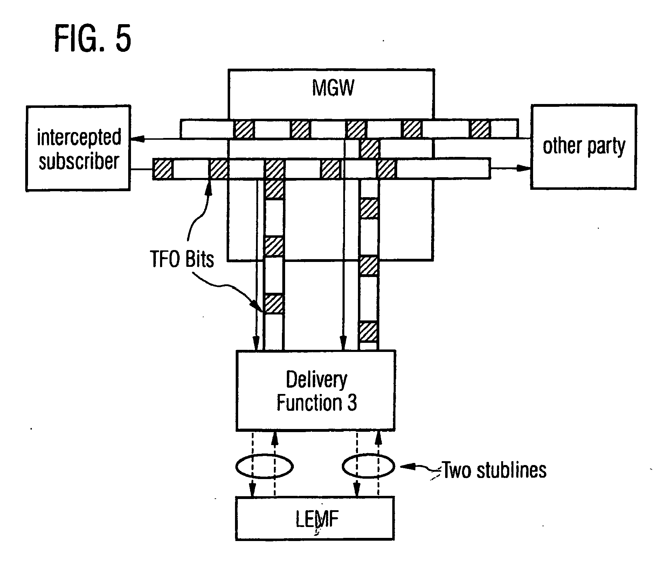

One alternative is that the MGW shall always provide the LEMF with all data sent and received between the two points of interception. This may then include copies of the TFO protocol to initiate Tandem Free Operation. This means the equipment in the LEMF will know when TFO is active or not. The bearer delivery is shown in Figure 5.

Another alternative is that this is performed by the DF3 and new explicit signalling is made to the LEMF to indicate if TFO is active or not. A further alternative is that the MSC can indicate when TFO is possible in the network during call establishment if it supports theTFO package and is requesting Transcoders to support the TFO function. This H.248 package also supports the ability to turn TFO off.

Furthermore it has be mentioned again that the invention is not restricted to the specific embodiments and examples described in the present invention. That is, on the basis of the teaching contained in the description, various modifications and variations of the invention may be carried out.

## Claims

1. A method in a telephone system for supporting a monitoring of payload data exchanged between at least two subscribers (A, B),
**characterized in** the step of
using a call related event to indicate selected codec types for limiting codec types available for being selected for an exchange of the payload data between the at least two subscribers (A, B) to codec types available in a monitoring apparatus.

2. The method according to claim 1, wherein a call related event is further used to indicate available codec types for limiting the codec types.

3. Method according to claim 1 or 2, wherein a copy of the payload data is sent to the monitoring apparatus.

4. The method according to claim 1, 2 or 3, wherein a first subscriber (MS A) is involved in the exchange of payload data, and wherein during setup of the exchange of payload data that is to be monitored a list of speech codec types that are supported by said first subscriber (MS A) is compared with a list of codec types that are supported by the monitoring apparatus (LEMF),
wherein an updated list of codec types is generated, in which all codec types are removed that are not supported by the monitoring apparatus (LEMF), and
wherein the updated codec list is used for setup the exchange of payload data instead of the list associated to the first subscriber (MS A).

5. The method according to claim 4, wherein the network node (MSC) keeps a list of which codec types are supported by a specific monitoring apparatus (LEMF).

6. The method according to any of the preceding claims, wherein a call related event is used to indicate a modification of the selected codec to the monitoring apparatus (LEMF).

7. The method according to claim 6, wherein the modification of the selected codec is time-stamped.

8. A network node in a telephone system for supporting a monitoring of payload data exchanged between at least two subscribers (A, B),
**characterized in that**
the network node is adapted to use a call related event to indicate selected codec types for limiting codec types available for being selected for an exchange of the payload data between the at least two subscribers (A, B) to codec types available in a monitoring apparatus.

9. The network node according to claim 8, adapted to further use a call related event to indicate available codec types for limiting the codec types.

10. The network node according to claim 8 or 9, adapted to send information on a codec type that has been selected for an exchange of the payload data between the at least two subscribers (A, B) to the monitoring apparatus, and
adapted to send a copy of the payload data to the monitoring apparatus.

11. The network node according to claim 8, 9 or 10,
adapted to compare during a setup of the exchange of payload data, which is to be monitored, a list of speech codec types, which are supported by a first subscriber (MS A) involved in the exchange of payload data, with a list of codec types that are supported by the monitoring apparatus (LEMF),
adapted to generate an updated list of codec types, in which all codec types are removed that are not supported by the monitoring apparatus (LEMF), and
adapted to use the updated codec list for the setup of the exchange of payload data instead of the list associated to the first subscriber (MS A).

12. The network node (MSC) according to any of the claims 8 to 11, adapted to use a call related event to indicate a modification of the selected codec to the monitoring apparatus (LEMF).

13. The network node (MSC) according to claim 12, adapted to time-stamp said modification of the selected codec.

14. A method for monitoring payload data exchanged in a telephone system between at least two subscribers (A, B),
**characterized in that**
information on codec types available in a monitoring apparatus is provided by the monitoring apparatus responsive to a request to a network node of the telephone system for limiting codec types available for being selected for the exchange of the payload data.

15. The method according to claim 14, wherein the information provisioning is performed in non-real time.

16. The method according to claim 14 or 15, wherein information on a codec type that has been selected for an exchange of the payload data between the at least two subscribers (A, B) is received at the monitoring apparatus, and
wherein a copy of the payload data is received at the monitoring apparatus.

17. A monitoring apparatus for monitoring payload data exchanged in a telephone system between at least two subscribers (A, B),
**characterized in that**
the monitoring apparatus is adapted to provide responsive to a request information on codec types available in the monitoring apparatus to a network node of the telephone system for limiting codec types available for being selected for the exchange of the payload data.

18. The monitoring apparatus according to claim 17, adapted to provide the information in non-real time.

19. The monitoring apparatus according to claim 17 or 18,
adapted to receive information on a codec type that has been selected for an exchange of the payload data between the at least two subscribers (A, B), and
adapted to receive a copy of the payload data.

20. A telephone system comprising at least one of the network nodes of claims 8 to 13.

21. A telephone system according to claim 20 comprising at least one of the monitoring apparatuses of claims 17 to 19.
